# EUROPEAN PATENT APPLICATION

(11) **EP 1 207 603 A2**
(43) Date of publication of application: **22.05.2002**
(21) Application number: 01126497.5
(22) Date of filing: 12.11.2001
(51) Int. Cl.: H02B 13/055

(54) **Gas-insulated switching apparatus**

(30) Priority: 20.11.2000 JP 2000352092
(71) Applicant: MITSUBISHI DENKI KABUSHIKI KAISHA, Tokyo 100-8310 (JP)
(72) Inventor: Tohya, Nobumoto, Chiyoda-ku, Tokyo 100-8310 (JP); Arioka, Masahiro, Chiyoda-ku, Tokyo 100-8310 (JP); Ookawa, Yoshihiro, Chiyoda-ku, Tokyo 100-8310 (JP)
(74) Representative: HOFFMANN - EITLE

(57) **Abstract**

A gas-insulated switching apparatus in which insulation is attained by air is provided. A gas-insulated switching apparatus that can be made even smaller than conventional ones is also provided. In the gas-insulated switching apparatus, dry pressurized air is sealed as an insulation gas. The dry pressurized air has a pressure of 0.11 to 0.3 MPa and a water content that is no more than 3,000 ppm in terms of a volume ratio of a volume of water vapor in which a vapor partial pressure of the dry pressurized air is converted to be 101,325 Pa.

## Description

### BACKGROUND OF THE INVENTION

### 1. Field of the Invention:

The present invention relates to a gas-insulated switching apparatus used for power systems and distribution systems and, more particularly, to a sealed gas-insulated switching apparatus.

### 2. Description of the Related Art:

It is known that air or sulfur hexafluoride is used as an insulation gas for insulation between disconnector poles, between grounded poles, between phases, or between charged portions in a gas-insulated switching apparatus. Conventionally, sulfur hexafluoride is frequently used and hence is the mainstream of the insulation gas because of its high withstand voltage and high arc-extinguishing ability. However, since sulfur hexafluoride has a problem of a large global warming factor, its use tends to be restricted with recent consciousness of environmental problems.

On the other hand, Japanese Patent Laid-Open No. 141105/1985 discloses a technique of using dry air as the insulation gas instead of sulfur hexafluoride because of the following problem. That portion of the gas-insulated switching apparatus which requires inspection most frequently is the circuit breaker. Where sulfur hexafluoride is used as the insulation gas, work of removing sulfur hexafluoride from the apparatus and recharging the apparatus with it is necessary in every inspection. A sulfur hexafluoride cylinder is needed to compensate for loss of sulfur hexafluoride due to its removal and recharging with it as well as to perform recharging. In this technique, dry air is compressed by a pressure pump and stored in a cylinder. When necessary, dry air is supplied from the cylinder to the gas-insulated switching apparatus. In the gas-insulated switching apparatus, the dry air is used in a non-pressurized state.

Incidentally, gas-insulated switching apparatuses now tend to be decreased in size to meet market needs. Although the decrease in size requires that the air used in gas-insulated switching apparatuses have a higher withstand voltage than in previous cases, non-pressurized dry air, which is used conventionally, cannot satisfy the requirement. Particularly in sealed gas-insulated switching apparatuses, the insulation gas that is sealed in the sealing container is required to have a particularly high withstand voltage, though they can be made smaller than other types of gas-insulated switching apparatuses because the former can provide much shorter interphase insulation distance and insulation distance to the earth than the latter.

### SUMMARY OF THE INVENTION

The invention has been made in view of the above circumstances in the related art, and an object of the invention is therefore to satisfy the recent requirements for gas-insulated switching apparatuses and hence to provide a gas-insulated switching apparatus in which insulation is attained by air having a high withst and voltage. Another object of the invention is to provide a gas-insulated switching apparatus that can be made even smaller than conventional ones.

A gas-insulated switching apparatus according to the invention comprises a sealing container including a switch accommodated therein, wherein dry pressurized air as an insulation gas is sealed in the container.

In contrast to sulfur hexafluoride that has frequently been used conventionally, dry pressurized air is completely harmless and hence never deteriorates the earth environments. Dry pressurized air can be acquired easily and inexpensively by, for example, compressing and storing it in a cylinder by the pump, for example, a method that is disclosed in Japanese Patent Laid-Open No. 141105/1985 and supplying it to the gas-insulated switching apparatus when necessary.

It is preferably that, in the gas-insulated switching apparatus, the dry pressurized air has a pressure of 0.11 to 0.3 MPa.

It is also preferably that, in the gas-insulated switching apparatus, the dry pressurized air has a water content that is no more than 3,000 ppm in terms of a volume ratio of a volume of water vapor in which a vapor partial pressure of the dry pressurized air is converted to be 101,325 Pa.

The dry pressurized air is given a much superior breakdown voltage characteristic if the dry pressurized air has a pressure of 0.11 to 0.3 Mpa and the dry pressurized air has a water content that is no more than 3,000 ppm. If the pressure of the dry pressurized air is set greater than or equal to 0.11 MPa, the problem that external moist air enters the sealed container in which the switch is accommodated can be solved, whereby the gas insulation performance of the sealed container can be kept for a long time.

It is also preferably that, in the gas-insulated switching apparatus, insulation barriers are provided between charged portions and grounded portions of the switch and between the charged portions.

If insulation barriers are provided between charged portions and grounded portion of the switch and between the charged portions, the sealed container and hence the gas-insulated switching apparatus can be made even smaller than in conventional cases by employing a composite insulation method in which the insulation function of the insulation barriers is added to the above-described gas insulation performance of the dry pressurized air.

It is also preferably that, in the gas-insulated switching apparatus, the switch is a vacuum valve.

If the switch is a vacuum valve, the breaking performance of the switch is improved and no decomposed components occur due to an arc that would otherwise occur at the time of opening or closing. This results in an advantage that the gas insulation performance of the dry pressurized air is kept stably.

### BRIEF DESCRIPTION OF THE DRAWINGS

Fig. 1 is an explanatory diagram of a gas-insulated switching apparatus according to a first embodiment of the invention;
Fig. 2 is a graph showing a relationship between the pressure and the breakdown voltage of dry pressurized air; and
Fig. 3 is an explanatory diagram of a gas-insulated switching apparatus according to a second embodiment of the invention.

### DESCRIPTION OF THE PREFERRED EMBODIMENTS

The invention will be hereinafter described in more detail by using embodiments in which the invention is applied to a gas-insulated switching apparatus for a three-phase AC circuit.

### Embodiment 1:

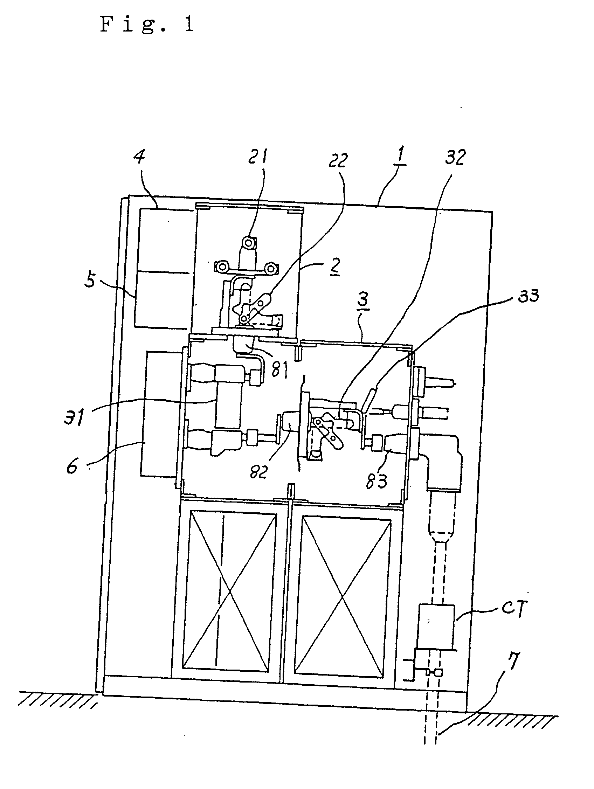

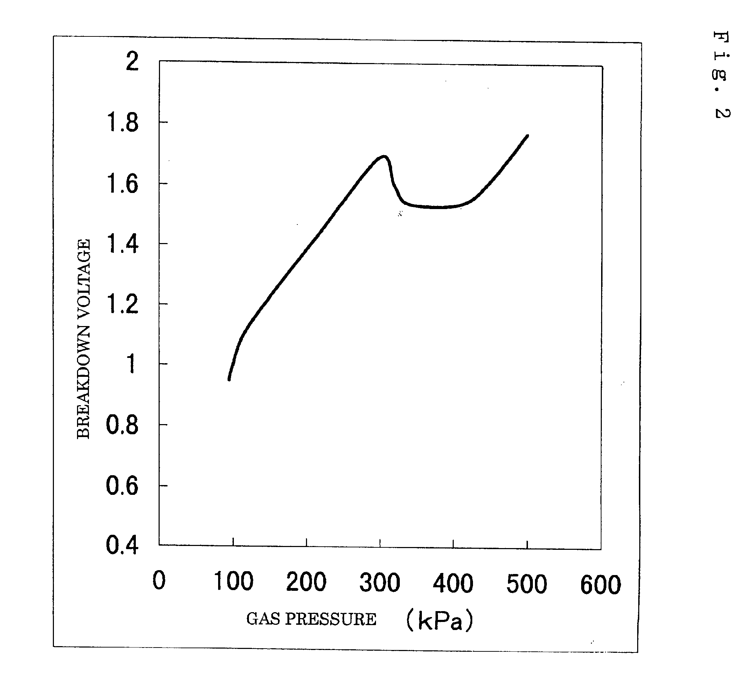

Figs. 1 and 2 are for description of a gas-insulated switching apparatus according to a first embodiment of the invention. Fig. 1 is an explanatory diagram showing the configuration of the first embodiment. Fig. 2 is a graph showing a relationship between the gas pressure and the breakdown voltage of dry pressurized air.

In Fig. 1, reference numeral 1 denotes a gas-insulated switching apparatus; 2, a first sealed container; 21, insulated bus lines; 22, bus line disconnectors; 3, a second sealed container; 31, circuit breakers; 32, disconnectors for receiving electric power; 33, grounding switches; 4, a disconnector operating mechanism; 5, an operating mechanism for grounding switches; 6, a circuit breaker operating mechanism; and 7, cables for receiving electric power. Three bus line disconnectors 22, circuit breakers 31, disconnectors 32, and grounding switches 33 are provided for the respective phases of the three-phase insulated bus lines 21. The bus lines 21 and the bus line disconnectors 22 are accommodated in the first sealed container 2, and the circuit breakers 31, the disconnectors 32, and the grounding switches 33 are accommodated in the second sealed container 3. Dry pressurized air is sealed to occupy the space of each of the first sealed container 2 and the second sealed container 3. The pressure (this is the total pressure including a water vapor partial pressure; this also applies to the following description) of the dry pressurized air is 0.2 MPa and its water content (the volume ratio of the volume of the water vapor in which the water vapor partial pressure of the dry pressurized air is converted to be 101,325 Pa; this also applies to the following description) is 1,500 ppm. The disconnector operating mechanism 4, the switch operating mechanism 5, the breaker operating mechanism 6, and the cables 7 are provided outside the sealing containers 2 and 3.

The bus lines 22 are connected to fixed electrodes of the circuit breakers 31 via insulation bushings 81. Movable electrodes of the circuit breakers 31 are connected to the disconnectors 32 via insulation bushings 82. The disconnectors 32 are connected to the cables 7 via insulation bushings 83 and transformers CT. The insulation bushings 83 are provided in the second sealed container 3.

Fig. 2 is a graph showing a relationship between the air pressure and the breakdown voltage of dry area (water content: 3,000 ppm or less) that was presented in CH1583-4/80/0000-0034$00.75, 1980 IEEE. The horizontal axis represents the gas pressure (in kPa), and the vertical axis represents the breakdown voltage with a normalization in which a breakdown voltage at the atmospheric pressure is given a value "1." To evaluate a relationship between the gas pressure of dry air that is sealed in a sealed container and the insulation distance, it is necessary to measure dielectric strength of a space gap. The breakdown voltages shown in Fig. 2 are ones that were measured by a bar-flat plate positive lightning impulse testing method which is considered the severest measuring method of such dielectric strength. It is seen from Fig. 2 that the breakdown voltage increases with increase of the dry air pressure and is saturated around a dry air pressure 0.30 MPa. On the other hand, an unduly low dry air pressure should cause a problem that external moist air enters the first sealed container 2 and the second sealed container 3. Since it is necessary to prevent such entrance of external air and to provide a good breakdown voltage characteristic, the invention employs dry pressurized air in a pressure range of 0.11 to 0.30 MPa. In the invention, it is preferable that the water content of the dry pressurized air is no more than 3,000 ppm, particularly no more than 2,000 ppm. Therefore, the dry pressurized air that is used in the first embodiment is a preferred example of the dry pressurized air according to the invention.

### Embodiment 2:

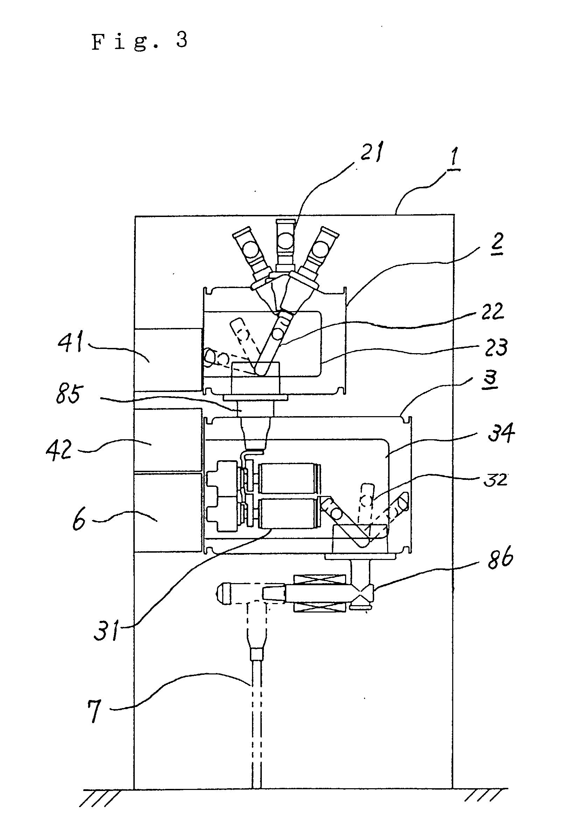

Fig. 3 is an explanatory diagram showing the configuration of a gas-insulated switching apparatus according to a second embodiment of the invention. In Fig. 3, reference numeral 1 denotes a gas-insulated switching apparatus; 2, a first sealed container; 21, insulated bus lines; 22, bus line disconnectors; 23, insulation barriers; 3, a second sealed container; 31, circuit breakers (vacuum valve breakers); 32, disconnectors for receiving electric power; 34, insulation barriers; 41, an operating mechanism for bus line disconnectors; 42, an operating mechanism for disconnectors for receiving electric power; 6, a circuit breaker operating mechanism; and 7, cables for receiving electric power. Three bus line disconnectors 22, insulation barriers 23, circuit breakers 31, disconnectors 32 for receiving electric power, and insulation barriers 34 are provided for the respective phases of the three-phase insulated bus lines 21. The bus lines 21, the bus line disconnectors 22, and the insulation barriers 23 are accommodated in the first sealed container 2, and the circuit breakers 31, the disconnectors 32 for receiving electric power, and the insulation barriers 34 are accommodated in the second sealed container 3. Dry pressurized air is sealed to occupy the space of each of the first sealed container 2 and the second sealed container 3. The pressure of the dry pressurized air is 0.25 MPa and its water content is 1,000 ppm. The operating mechanism 41 for bus line disconnectors, the operating mechanism 42 for disconnectors for receiving electric power, the breaker operating mechanism 6, the cables 7, etc. are provided outside the sealing containers 2 and 3.

The bus line disconnectors 22 are connected to fixed electrodes of the circuit breakers 31 via insulation bushings 85. Movable electrodes of the circuit breakers 31 are connected to the disconnectors 32 for receiving electric power. The disconnectors 32 for receiving electric power are connected to the cables 7 via insulation bushings 86.

A contact portion of the circuit breaker 31 where an arc may occurs when the circuit breaker 31 are switched. Vacuum switching valve ( not shown ) are used for the circuit breaker 31. In such vacuum switching valve, moving electrode are moved to fixed electrode to switch circuit lines connection state and disconnection states.

The insulation barriers 23 serve as insulation barriers between conductor charged portions of the three respective phases in the first sealed container 2. The insulation barriers 34 serve as insulation barriers between a plurality of charged portions in the second sealed container 3 and between these charged portions and grounded portions. The insulation barriers 23 and 34 are made of an electric insulation material such as an epoxy resin plate, a glass epoxy lamination plate, or a glass base unsaturated polyester resin type molding material.

In the invention, the switch may be the bus line disconnector, the circuit breaker, the vacuum switching valve, the disconnector for receiving electric power, or the grounding switch shown in Fig. 1 and 3 or some other switch such as a load switch.

## Claims

1. A gas-insulated switching apparatus comprising a sealing container including a switch accommodated therein, **characterized in that** dry pressurized air as an insulation gas is sealed in the container 2,3.

2. The gas-insulated switching apparatus according to claim 1, wherein the dry pressurized air has a pressure of 0.11 to 0.3 MPa.

3. The gas-insulated switching apparatus according to one of the preceding claims, wherein the dry pressurized air has a water content that is no more than 3,000 ppm in terms of a volume ratio of a volume of a water vapor in which a water vapor partial pressure of the dry pressurized air is converted to be 101,325 Pa.

4. The gas-insulated switching apparatus according to one of the preceding claims, wherein insulation barriers 23,34 are provided between charged portions and grounded portions and between the charged portions.

5. The gas-insulated switching apparatus according to one of the preceding claims, wherein the switch 31 is a vacuum valve.
